# DEMANDE DE BREVET EUROPEEN

(11) **EP 1 336 362 A1**
(43) Date de publication de la demande: **20.08.2003**
(21) Numéro de dépôt: 03002903.7
(22) Date de dépôt: 10.02.2003
(51) Int. Cl.: A47F 5/13, E04G 1/34, B25H 1/06

(54) **Tréteau**

(30) Priorité: 14.02.2002 FR 0201830
(71) Demandeur: GARCIA, Raymond, 11150 Bram (FR)
(72) Inventeur: GARCIA, Raymond, 11150 Bram (FR)

(57) **Abrégé**

Ce tréteau (1) comprend une structure de base (2) et quatre pieds (4, 6) pivotants.

Selon l'invention :
- les quatre pieds (4, 6) sont télescopiques et se répartissent en deux pieds (4) à éléments télescopiques extérieurs (4a) "courts" et en deux pieds (6) à éléments télescopiques extérieurs (6a) "longs" ; et
- chaque pied (4, 6) présente au niveau de sa partie supérieure (4b, 6b), une vis (12) perpendiculaire à l'axe longitudinal de cette partie supérieure (4b, 6b), cette vis (12) étant propre, lorsqu'elle est vissée, à venir en appui contre le montant (3) de la structure de base (2) et à définir ainsi une position angulaire déterminée de pivotement du pied (4, 6) par rapport à ce montant (3).

## Description

Un tréteau classique a pour inconvénient d'être instable lorsque la surface sur laquelle le tréteau est posé n'est pas parfaitement plane, et de ne pas pouvoir s'adapter à une surface comprenant des plans de niveaux différents comme par exemple un escalier ou un sol en déclivité. Ce genre de problème est en général solutionné par un calage hasardeux favorisant l'insécurité.

La présente invention vise à remédier à ces inconvénients, donc à fournir un tréteau qui puisse être placé de manière stable sur une surface irrégulière, avec des plans différents ou en déclivité.

Le tréteau concerné comprend de manière connue en soi, une structure de base sur laquelle quatre pieds sont montés pivotants; la structure de base présente un montant vertical en regard de chaque pied et chaque pied comprend une partie supérieure située au-dessus de la zone par laquelle il est relié à ce montant, cette partie supérieure étant angulée par rapport à la partie inférieure du pied et étant telle qu'elle vient porter contre ledit montant, ou contre une pièce portée par ce montant, lorsque le pied est déplié.

Selon l'invention :
- les quatre pieds sont télescopiques et des moyens sont prévus pour immobiliser un élément télescopique de chaque pied par rapport à l'autre élément télescopique de ce pied dans une pluralité de positions longitudinales déterminées ;
- les quatre pieds se répartissent en deux pieds à éléments télescopiques extérieurs "courts" et en deux pieds à éléments télescopiques extérieurs "longs", ces éléments télescopiques extérieurs "courts" et "longs" étant conformés pour, dans une position des éléments télescopiques de chaque pied, déterminer une longueur égale pour les quatre pieds, permettant une utilisation classique du tréteau, et pour, dans d'autres positions de ces éléments télescopiques, aménager des pieds "courts" et des pieds "longs" ; et
- chaque pied présente au niveau de sa partie supérieure, une vis perpendiculaire à l'axe longitudinal de cette partie supérieure, cette vis étant propre, lorsqu'elle est vissée, à venir en appui contre ledit montant de la structure de base et à définir ainsi une position angulaire déterminée de pivotement du pied par rapport à ce montant.

Pour un sol où la surface est plane ou ne comporte que de faibles irrégularités, les pieds sont réglés de manière à avoir des longueurs égales, permettant une utilisation classique du tréteau. Lorsque lesdites faibles irrégularités empêchent un appui stable du tréteau, la vis d'au moins un pied est actionnée pour régler la position angulaire de ce pied de manière à trouver un appui stable du tréteau.

En cas de surface comprenant des plans de niveaux différents, comme par exemple un escalier, ou en cas de sol en déclivité, les deux pieds à éléments télescopiques extérieurs "courts" et les deux pieds à éléments télescopiques extérieurs "longs" sont réglés de manière à s'adapter à cette surface et à maintenir ladite structure de base en position horizontale, les deux pieds à éléments télescopiques extérieurs "courts" prenant appui sur la marche supérieure d'un escalier ou sur la zone amont d'un sol en déclivité, et les deux pieds à éléments télescopiques extérieurs "longs" prenant appui sur la marche inférieure de cet escalier ou sur la zone aval de ce sol en déclivité.

Les quatre pieds peuvent être démontables par rapport à ladite structure de base de telle sorte que les deux pieds à éléments télescopiques extérieurs "courts" et les deux pieds à éléments télescopiques extérieurs "longs" peuvent être placés indifféremment sur l'un ou l'autre des deux côtés de cette structure de base et être permutés deux par deux.

Selon une possibilité :
- ladite partie supérieure angulée d'au moins un des pieds pivotants a une partie de section transversale circulaire ;
- ledit montant comprend une pièce de section transversale en forme de "U" fixée à lui, les deux parois latérales de cette pièce en forme de "U" étant placées à une distance l'une de l'autre inférieure au diamètre de ladite partie de section transversale circulaire, l'ensemble étant conformé de telle sorte que, en position de dépliage du pied, ladite partie de section transversale circulaire soit en appui contre lesdites parois latérales de la pièce en forme de "U", en étant calée latéralement par rapport à celles-ci.

Ledit pied vient ainsi en appui contre le montant par engagement de deux surfaces d'appui longitudinales distantes (les bords des parois latérales de la pièce en "U") contre une surface circulaire, ce qui permet un parfait calage transversal de ce pied et assure donc un assemblage parfaitement rigide de ce pied et de ladite structure de base.

Selon une autre possibilité :
- le montant auquel au moins un pied est relié a une partie de section transversale circulaire en regard de ladite partie supérieure de ce pied pivotant, et
- ladite partie supérieure de ce pied comporte cette pièce de section transversale en forme de "U", les deux parois latérales de cette pièce en forme de "U" étant placées à une distance l'une de l'autre inférieure au diamètre de ladite partie de section transversale circulaire, l'ensemble étant conformé de telle sorte que, en position de dépliage du pied, ladite partie de section transversale circulaire soit en appui contre lesdites parois latérales de la pièce en forme de "U", en étant calée latéralement par rapport à celles-ci.

Cette autre possibilité prévoit par conséquent, par rapport à la première possibilité citée, une inversion de la pièce en "U" et de la partie circulaire.

Chaque pied présente avantageusement ladite partie de section transversale circulaire ou est équipé de ladite pièce en "U", et chaque montant correspondant est, respectivement, équipé de ladite pièce en "U" ou présente ladite section transversale circulaire. Trois des pieds sont ainsi parfaitement calés par rapport à ladite structure de base dans leurs positions maximales de dépliage, tandis que la vis du quatrième pied permet de régler la position angulaire de ce pied de telle sorte que cette position angulaire soit adaptée aux irrégularités de la surface du sol sur lequel est posé le tréteau, afin de réaliser le parfait calage de ce tréteau.

De préférence, les moyens prévus pour immobiliser un élément télescopique d'un pied par rapport à l'autre élément télescopique de ce pied dans une pluralité de positions déterminées comprennent :
- un alésage aménagé au travers d'un élément télescopique ;
- une série de trous successifs aménagés au travers de l'autre élément télescopique, propres à venir en coïncidence dudit alésage, et
- une broche propre à être engagée au travers dudit alésage et d'un trou venu en coïncidence de cet alésage.

De préférence, chaque montant latéral présente une section transversale carrée et comporte deux paires de pattes fixées à lui en vis à vis, chaque paire de pattes formant une chape de réception d'un pied, ladite pièce en "U" étant fixée au montant par sa paroi intermédiaire entre les pattes.

Avantageusement, les deux parois latérales de chaque pièce en "U" sont positionnées l'une par rapport à l'autre de telle sorte que leurs faces extérieures viennent à proximité immédiate des faces intérieures des pattes de la paire de pattes correspondante.

Chacun des quatre pieds télescopiques pivotant est assemblé à la structure de base à l'aide d'une broche engagée dans des trous aménagés dans lesdites pattes et au travers du pied, cette broche étant amovible pour permettre la permutation des pieds en fonction de la configuration du sol.

En outre chaque pied peut présenter une semelle à son extrémité inférieure.

L'invention sera bien comprise, et d'autres caractéristiques et avantages de celle-ci apparaîtront, en référence au dessin schématique annexé ; ce dessin illustre l'invention.

Dans ce dessin,
la figure 1 est une vue en perspective du tréteau en position standard ;
la figure 2 est un vue en perspective d'un détail, à échelle agrandie ;
la figure 3 est une vue en coupe selon la ligne A-A de la figure 2 ;
la figure 4 est une vue du détail d'un pied "court" en position raccourcie ;
la figure 5 est une vue du détail d'un pied "court" en position allongée ;
la figure 6 est une vue du détail d'un pied "long" en position raccourcie ;
la figure 7 est une vue du détail d'un pied "long" en position allongée.
la figure 8 est un vue en perspective d'une variante de réalisation, et
la figure 9 est une vue en coupe selon la ligne B-B de la figure 8.

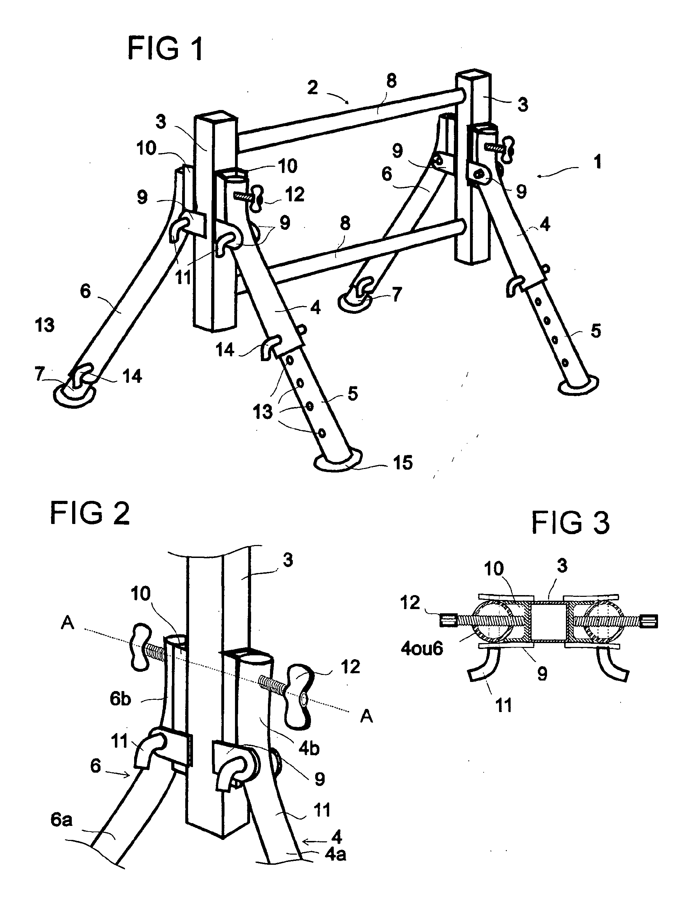

La figure 1 représente un tréteau 1 en position standard du genre de ceux utilisés sur les chantiers, notamment par les peintres pour former une estrade surélevée.

Ce tréteau 1 comprend une structure de base 2 sur laquelle sont assemblés deux pieds télescopiques "courts" et pivotants 4 et deux pieds télescopiques "longs" et pivotants 6.

La structure 2 est formée par deux montants latéraux 3 à section transversale carrée et deux traverses 8 reliant ces montants 3 l'un à l'autre.

Ces traverses 8 sont parallèles l'une à l'autre.

Comme le montrent plus particulièrement les figures 2 et 3, chaque montant 3 comporte deux paires de pattes 9 fixées à lui, formant des chapes de réception des pieds 4 et 6. Chaque paire de pattes 9 est fixée sur une face du montant 3 perpendiculaire à l'axe longitudinal des traverses 8, à la même hauteur que l'autre paire de pattes 9, et fait saillie du montant 3 dans une direction perpendiculaire à l'axe longitudinal des traverses 8. Les pattes 9 d'un montant 3 sont ainsi positionnées à la même hauteur que les pattes 9 de l'autre montant 3.

En outre, chaque montant 3 comporte deux pièces profilées 10 à section transversale en forme de "U". Chaque pièce 10 est fixée au montant 3 par sa paroi intermédiaire de telle sorte que son quart inférieur, environ, se trouve au niveau des pattes 9. Les deux parois latérales de la pièce 10 sont positionnées l'une par rapport à l'autre de telle sorte que leurs faces extérieures viennent à proximité immédiate des faces intérieures des pattes 9, comme cela est visible sur la figure 3.

L'ensemble de la structure 2 peut être métallique, et les montants 3, traverses 8, pattes 9 et pièces 10 peuvent être fixés les uns aux autres par soudage.

Chaque pied 4 et 6 présente une structure tubulaire et est relié à la structure 2 par une broche 11 engagée transversalement par rapport à lui, ainsi qu'au travers des deux pattes 9 recevant ce pied 4 ou 6. Chaque pied 4 se subdivise, sensiblement de part et d'autre de la zone traversée par la broche 11, en une partie principale inférieure 4a et en une partie coudée supérieure 4b. Chaque pied 6 se subdivise, sensiblement de part et d'autre de la zone traversée par la goupille 11, en une partie principale inférieure 6a et en une partie coudée supérieure 6b. Les parties coudées supérieures 4b et 6b sont identiques. Comme le montrent les figures, le coude formé dans chaque pied 4 et 6 est tel que la position de dépliage maximal des pieds 4 et 6 montrés sur les figures 1 et 2 fournit une bonne stabilité au tréteau 1. Cette position de dépliage est déterminée par la venue des portions 4b et 6b en appui contre les ailes latérales des pièces 10.

Il apparaît sur les figures 1, 2 et 3 que la portion 4b de chaque pied 4 présente, au niveau de la partie supérieure de cette portion 4b un alésage taraudé traversant cette portion 4b, orienté dans une direction perpendiculaire à celle de la goupille 11. Cet alésage taraudé reçoit une vis à oreilles 12. Cette vis 12 vient porter, au cours de son vissage, contre la face interne de la paroi intermédiaire de la pièce 10 et permet ainsi de déterminer une position maximale de dépliage du pied 4. Les portions 4b des pieds 4 et les portions 6b des pieds 6 étant identiques, la vis 12 se retrouve sur la portion 6b du pied 6.

Les pieds 4 et 6 peuvent être permutés, les broches 11 étant engagées au travers des pattes 9 et des pieds 4 et 6 de manière amovible.

Chaque pied court 4 reçoit dans sa portion tubulaire inférieure 4a, un élément tubulaire 5 destiné à coulisser à l'intérieur de cette portion tubulaire 4a. L'élément coulissant 5 présente une série de trous 13 permettant le réglage en hauteur du pied 4. Une broche 14 traversant la portion tubulaire inférieure 4a et le trou 13 correspondant de l'élément 5 permet de fixer la hauteur voulue du pied court 4.

Chaque pied long 6 reçoit dans sa portion tubulaire inférieure 6a, un élément tubulaire 7 destiné à coulisser à l'intérieur de cette portion tubulaire 6a. L'élément coulissant 7 présente une série de trous 13 permettant le réglage en hauteur du pied 6. Une broche 14 traversant la portion tubulaire inférieure 6a et le trou 13 correspondant de l'élément 7 permet de fixer la hauteur voulue du pied long 6.

En outre chaque élément coulissant 5 et 7 présente une semelle 15 à son extrémité inférieure. Cette semelle permet une prise d'appui stable du pied et d'éviter l'enfoncement du pied en cas de sol meuble.

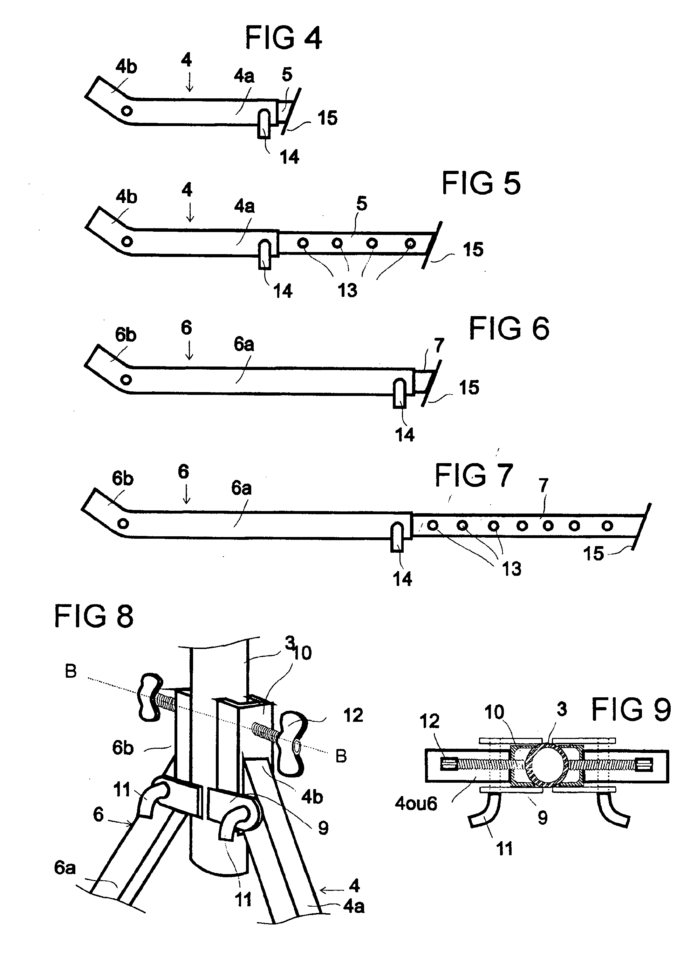

Les figures 4 à 7 montrent les positons minima et maxima des pieds courts 4 et des pieds longs 6. La figure 4 représente le pied court 4 raccourci au minimum, La figure 5 représente le pied court 4 allongé au maximum, La figure 6 représente le pied long 6 raccourci au minimum, et la figure 7 représente le pied long 6 allongé au maximum. Il apparaît en particulier sur les figures 5 et 6 que le pied court 4 allongé, est de longueur égale au pied long 6 raccourci.

En conservant le principe de la partie supérieure du pied 4b ou 6b de section circulaire venant en appui contre les parois latérales de la pièce en "U" 10, il est possible d'exécuter une variante du tréteau 1 en permutant les deux parties : les figures 8 et 9 montrent cette variante où la position de la pièce en "U" 10 est inversée. Dans ce cas précis, le montant 3 présente une section tubulaire ronde, la pièce en "U" est fixée par sa paroi intermédiaire sur le pied 4 ou 6 suivant un angle déterminé, se substituant à la partie coudée 4b ou 6b des pieds 4 ou 6. Les deux parois latérales de ladite pièce en "U" sont placées à une distance inférieure au diamètre de montant 3. La pièce en "U" 10 présente dans sa partie intermédiaire un alésage taraudé la traversant, recevant la vis 12. Les pieds 4 avec leur élément coulissant 5 ainsi que les pieds 6 avec leur élément coulissant 7 pouvant être de section carrée.

En pratique, pour un sol présentant des différences de niveaux comme un escalier par exemple, ou un sol en déclivité, les vis 12 sont dévissées puis les pieds 4 et 6 sont amenés en position de pivotement maximal, dans laquelle ils viennent au contact des bords d'extrémité des parois latérales des pièces 10. Les pieds 4 et 6 sont ajustés à la bonne hauteur par rapport au niveau de la surface d'appui à l'aide des éléments coulissants respectifs 5 et 7 fixés par les goupilles 14.

Dans le cas où un des pieds 4 ou 6 ne touche upas le sol, rendant le tréteau 1 instable, la vis 12 du pied 4 ou 6 non en contact avec le sol, peut être serrée de manière à faire pivoter ce pied 4 ou 6 jusqu'à l'amener dans une position angulaire dans laquelle la semelle 15 de ce pied 4 ou 6 vient en appui sur le sol.

Une parfaite stabilité du tréteau est ainsi obtenue, combinée à une parfaite rigidité de l'ensemble formé par la structure 2 et les pieds 4 et 6.

Le tréteau 1 est dès lors à même de recevoir des charges relativement pesantes dans de parfaites conditions de stabilité.

Ainsi qu'il apparaît de ce qui précède, l'invention fournit un tréteau présentant par rapport aux tréteaux homologues de la technique antérieure, l'avantage déterminant de pouvoir être placé de manière stable sur un sol irrégulier présentant des plans différents, tel un escalier, ou sur un sol en déclivité, tout en pouvant recevoir des charges relativement pesantes.

## Revendications

1. Tréteau (1) comprenant une structure de base (2) sur laquelle quatre pieds (4, 6) sont montés pivotants ; la structure de base (2) présente un montant vertical (3) en regard de chaque pied (4, 6) et chaque pied (4, 6) comprend une partie supérieure (4b, 6b) située au-dessus de la zone par laquelle il est relié à ce montant (3), cette partie supérieure (4b, 6b) étant angulée par rapport à la partie inférieure (4a, 6a) du pied (4, 6) et étant telle qu'elle vient porter contre ledit montant (3), ou contre une pièce (10) portée par ce montant (3), lorsque le pied (4, 6) est déplié .
tréteau (1) **caractérisé en ce que** :
- les quatre pieds (4, 6) sont télescopiques et des moyens (13, 14) sont prévus pour immobiliser un élément télescopique (5, 7) de chaque pied (4, 6) par rapport à l'autre élément télescopique (4a, 6a) de ce pied (4, 6) dans une pluralité de positions longitudinales déterminées ;
- les quatre pieds (4, 6) se répartissent en deux pieds (4) à éléments télescopiques extérieurs (4a) "courts" et en deux pieds (6) à éléments télescopiques extérieurs (6a) "longs", ces éléments télescopiques extérieurs "courts" et "longs" (4a, 6a) étant conformés pour, dans une position des éléments télescopiques (4a, 6a, 5, 7) de chaque pied (4, 6), déterminer une longueur égale pour les quatre pieds (4, 6), permettant une utilisation classique du tréteau (1), et pour, dans d'autres positions de ces éléments télescopiques (4a, 6a, 5, 7), aménager des pieds (4) "courts" et des pieds (6) "longs" ; et
- chaque pied (4, 6) présente au niveau de sa partie supérieure (4b, 6b), une vis (12) perpendiculaire à l'axe longitudinal de cette partie supérieure (4b, 6b), cette vis (12) étant propre, lorsqu'elle est vissée, à venir en appui contre ledit montant (3) de la structure de base (2) et à définir ainsi une position angulaire déterminée de pivotement du pied (4, 6) par rapport à ce montant (3).

2. Tréteau (1) selon la revendication 1, **caractérisé en ce que** les quatre pieds (4, 6) sont démontables par rapport à ladite structure de base (2) de telle sorte que les deux pieds (4) à éléments télescopiques extérieurs "courts" (4a) et les deux pieds (6) à éléments télescopiques extérieurs "longs" (6a) peuvent être placés indifféremment sur l'un ou l'autre des deux côtés de cette structure de base (2) et être permutés deux par deux.

3. Tréteau (1) selon la revendication 1 ou la revendication 2, **caractérisé en ce que** :
- ladite partie supérieure (4b, 6b) angulée d'au moins un des pieds (4, 6) pivotants a une partie de section transversale circulaire ;
- ledit montant (3) comprend une pièce (10) de section transversale en forme de "U" fixée à lui, les deux parois latérales de cette pièce (10) en forme de "U" étant placées à une distance l'une de l'autre inférieure au diamètre de ladite partie de section transversale circulaire, l'ensemble étant conformé de telle sorte que, en position de dépliage du pied (4, 6), ladite partie de section transversale circulaire soit en appui contre lesdites parois latérales de la pièce (10) en forme de "U", en étant calée latéralement par rapport à celles-ci.

4. Tréteau (1) selon la revendication 1 ou la revendication 2, **caractérisé en ce que** :
- le montant (3) auquel au moins un pied (4, 6) est relié a une partie de section transversale circulaire en regard de ladite partie supérieure (4b, 6b) de ce pied (4, 6) pivotant, et
- ladite partie supérieure (4b, 6b) de ce pied (4, 6) comporte cette pièce (10) de section transversale en forme de "U", les deux parois latérales de cette pièce (10) en forme de "U" étant placées à une distance l'une de l'autre inférieure au diamètre de ladite partie de section transversale circulaire, l'ensemble étant conformé de telle sorte que, en position de dépliage du pied (4, 6), ladite partie de section transversale circulaire soit en appui contre lesdites parois latérales de la pièce (10) en forme de "U", en étant calée latéralement par rapport à celles-ci.

5. Tréteau (1) selon l'une des revendications 3 ou 4, **caractérisé en ce que** chaque pied (4, 6) présente ladite partie de section transversale circulaire ou est équipé de ladite pièce (10) en forme de "U", et chaque montant (3) correspondant est, respectivement, équipé de ladite pièce (10) en forme de "U" ou présente ladite section transversale circulaire.

6. Tréteau (1) selon l'une des revendications 1 à 5, **caractérisé en ce que** les moyens prévus pour immobiliser un élément télescopique (5, 7) d'un pied (4, 6) par rapport à l'autre élément télescopique (4a, 6a) de ce pied (4, 6) dans une pluralité de positions déterminées comprennent :
- un alésage aménagé au travers d'un élément télescopique (4a, 6a) ;
- une série de trous successifs (13) aménagés au travers de l'autre élément télescopique (5, 7), propres à venir en coïncidence dudit alésage, et
- une broche (14) propre à être engagée au travers dudit alésage et d'un trou (13) venu en coïncidence de cet alésage.

7. Tréteau (1) selon l'une des revendications 1 à 6, **caractérisé en ce que** chaque montant (3) latéral présente une section transversale carrée et comporte deux paires de pattes (9) fixées à lui en vis à vis, chaque paire de pattes (9) formant une chape de réception d'un pied (4, 6), ladite pièce (10) en forme de "U" étant fixée au montant (3) par sa paroi intermédiaire entre les pattes (9).

8. Tréteau (1) selon la revendication 7, **caractérisé en ce que** les deux parois latérales de chaque pièce (10) en forme de "U" sont positionnées l'une par rapport à l'autre de telle sorte que leurs faces extérieures viennent à proximité immédiate des faces intérieures des pattes (9) de la paire de pattes correspondante.

9. Tréteau (1) selon l'une des revendications 2 à 8, **caractérisé en ce que** chacun des quatre pieds (4, 6) télescopiques pivotant est assemblé à la structure de base (2) à l'aide d'une broche (11) engagée dans des trous aménagés dans lesdites pattes (9) et au travers du pied (4, 6), cette broche (11) étant amovible pour permettre la permutation des pieds (4, 6) en fonction de la configuration du sol.

10. Tréteau (1) selon l'une des revendications 1 à 9, **caractérisé en ce que** chaque pied (4, 6) présente une semelle (15) à son extrémité inférieure.
